# EUROPEAN PATENT SPECIFICATION

(11) **EP 0 363 977 B1**
(45) Date of publication and mention of the grant of the patent: **23.02.1994**
(21) Application number: 89119053.0
(22) Date of filing: 13.10.1989
(51) Int. Cl.: H01J 1/63

(54) **Magnesium tantalum oxide x-ray intensifying screens**
Magnesium-Tantal-Oxid-Röntgenstrahlen-Intensivierungsschirm
Ecran d'intensification de rayons X contenant de l'oxyde mixte de tantale et de magnésium

(30) Priority: 14.10.1988 US 257910
(43) Date of publication of application: 18.04.1990
(73) Proprietor: EASTMAN KODAK COMPANY (a New Jersey corporation), Rochester, New York 14650 (US)
(72) Inventor: Sieber, Kurt DeLance c/o Eastman Kodak Company, Rochester New York 14650 (US)
(74) Representative: Brandes, Jürgen, Dr. rer. nat.

(56) References cited:
- BLASSE et al. "Luminescence and Energy Transfer", 1980 SPRINGER, Berlin-Heidelberg- -New York pages 1-41
- MACKE "Luminescence in the System Mg-Ta-Nb-O", vol. 19, 1976 JOURNAL OF SOLID STATE CHEMISTRY pages 221-226
- CHEMICAL ABSTRACTS, vol. 107, no. 18, November 2, 1987, Columbus, Ohio, USA NAKAJIMA, SHIGEHARU et al. "Image-intensifying sheet for x-ray screen" page 769
- BLASSE et al. "Luminescence in Some Tantalate Host Lattices", vol. 3, 1971 JOURNAL OF SOLID STATE CHEMISTRY pages 69-74

## Description

This invention relates to a class of materials highly suitable for radiography. It particularly relates to an x-ray intensifying screen utilized to minimize time of exposure to x-rays.

In the radiographic art, intensifying screens are used in order to diminish the time of exposure of an object in producing its image in a radiographic silver halide element. These intensifying screens comprise phosphors, i.e., substances which fluoresce under exposure to x-rays or other types of excitations, such as ultraviolet and gamma rays. Typical phosphors used in the preparation of radiographic intensifying screens include gadolinium oxysulfide, zinc sulfide, magnesium tungstate, barium lead sulfate, and yttrium tantalate. Calcium tungstate was the first widely used phosphor and remains a standard phosphor against which new x-ray intensifying screen phosphors are tested.

The effect and desirability of various phosphor-containing screens can be measured by the light intensity of the radiation given off by the screen upon exposure to x-ray radiation. Further, it is important that the screen have a high degree of brightness when being exposed to the x-rays but have little persistence of phosphorescence also called afterglow, as any afterglow or persistent image will affect the quality of later x-ray photographs (radiographs) by causing ghost images.

There have been proposed other combinations of materials for use in x-ray intensifying screens, also called x-ray conversion screens. U. S. Patent 3,829,700-Buchanan et al proposed that oxysulfides of lanthanum, gadolinium or lutetium activated with trivalent terbium be utilized. In U. S. Patent 3,778,615-Luckey it is proposed that alkaline earth sulfates such as strontium barium sulfate activated with lanthanides be utilized. In U. S. Patent 4,259,588-Luckey et al it is proposed that a blue light absorber be added to the x-ray intensifying screen. In U. S. Patent 4,068,129-Rabatin it is proposed that oxybromides of lanthanum and gadolinium be utilized in x-ray image converters. In U. S. 4,507,560-Mathers et al a terbium-activated gadolinium oxysulfide x-ray intensifier is proposed. Niobium-activated and rare earth-activated yttrium, lutetium, and gadolinium tantalates are illustrated by Brixner U. S. Patent 4,225,653.

The luminescence of magnesium tantalates, and niobates has been discussed in literature articles: Journal of Solid State Chemistry 3, 69-74 (1971) entitled "Luminescence in Some Tantalate Host Lattices", authors G. Blasse and A. Bril; Journal of Solid State Chemistry 72, 72-79 (1988) entitled "The Influence of Crystal Structure on the Luminescence of Tantalates and Niobates" authored by G. Blasse; and Journal of Solid State Chemistry 19, 221-226 (1976) entitled "Luminescence in the System Mg₄Ta₂₋ₓNbₓO₉, author A.J.H. Macke. However, the literature did not disclose the utilization of magnesium tantalates or niobates for x-ray intensifying screens.

US-A-4,959,174 discloses as phosphors in x-ray screen materials rare earth tantalate and/or rare earth niobate containing a quantity of a divalent metal. The formula for the phosphors used in the x-ray screens disclosed in US-A-4,959,174 is M_{y}Ln_{1-x-(2/3)y}DO₄:xR^{³⁺} where M is at least one divalent metal selected from the group consisting of Be, Mg, Ca, Sr, Ba, Zn, and Cd, Ln being at least one selected from the group consisting of Y, Gd, La, and Lu, D being either or both Ta and Nb, R being at least one selected from the group consisting of Tm, Pr, Sm, Eu, Tb, Dy and Yb, and y is a value in the range 1x10⁻⁵ ≦ y ≦ 1, and x is a value in the range 0 ≦ x ≦ 0.05. Screens comprising these phosphors apparently possess improved after-glow and light emission characteristics.

There remains a need for improved phosphors that are brighter than conventional calcium tungstate phosphors. Further, there is a need for x-ray intensifying screens composed of stable chemical compounds that will not hydrolyze and do not require expensive forming techniques. Further, there is a need for improved x-ray intensifying screens that emit light in the wavelengths where the x-ray photographic films are sensitive. There is a particular need for improved phosphors that will emit in the blue region where silver halides have native light sensitivity.

An object of the invention is to overcome disadvantages of prior x-ray intensifying screens.

Another object of the invention is to provide improved x-ray intensifying screens that are easy to form.

A further object of the invention is to provide stable x-ray intensifying screens that do not hydrolyze to a disadvantageous degree.

An additional object is to provide a primarily blue emitting x-ray intensifying screen.

These and other objects of the invention are generally accomplished by providing an x-ray intensifying screen comprising a phosphor layer containing magnesium tantalum oxide. The magnesium tantalum oxide may be substituted in up to 20 mole percent of niobium for the tantalum. The magnesium tantalate phosphors are dispersed in a binder and coated on a support to provide an x-ray intensifying screen which can be used to convert x-rays to visible light. The x-ray intensifying screens which employ the magnesium tantalum oxide, optionally containing rare earths and/or niobium are useful in the fields of medical, dental, and industrial radiography where it is important to reduce the exposure time to x-rays and to create clear, sharp images.

In Fig. 1 is a cross-section of an x-ray intensifying screen in accordance with the invention.

Figs. 2-6 are x-ray excited prompt emission spectra of the materials of the invention.

The invention provides numerous advantages over prior x-ray intensifying phosphors and screens. The phosphors are bright enough to be used in improved x-ray intensifying screens. The phosphors are prepared by heating in air and are stable compounds that do not exhibit hydrolysis problems. Another advantage is that the phosphors of the invention emit light primarily in the blue wavelength region of the spectrum where existing x-ray films are sensitive. Therefore, new films do not have to be formulated to take advantage of the improved x-ray intensifying screens of the invention. The screens of the invention will serve to improve the performance of the present films. These and other advantages of the invention will be apparent from the drawings and the description below.

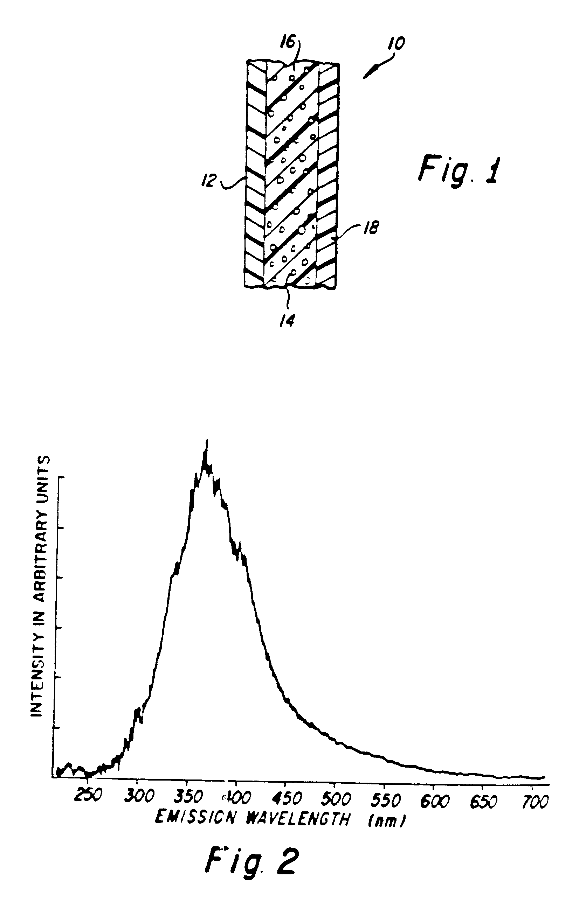

As illustrated in Fig. 1, an image intensifying plate 10 is composed of a backing layer 12 onto which has been cast the x-ray intensifying layer that is comprised of particles 14 of magnesium tantalate that are imbedded in a matrix material 16 that typically would be a polymeric material. Protective layer 18 guards the x-ray intensifying material from damage during use. The magnesium tantalum oxide utilized in the x-ray intensifying screens of the invention has been shown to emit light in the visible spectrum, particularly blue, when irradiated by x-rays. Niobium can be used as an activator for the magnesium tantalum oxide giving another series of x-ray phosphors of the composition Mg₄Ta₂₋ₓNbₓO₉ where the concentration of niobium is between 0 and 20 mole percent, based on total moles of pentavalent cation present, that is, x = 0 to 0.4. The notation Mg₄Ta₂₋ₓNbₓO₉ used here is standard literature nomenclature for luminophores and is equivalent to the nomenclatures Mg₄Ta₂O₉:xNb and Mg₄Ta₂₋₂ₓNb₂ₓO₉ which are found elsewhere in the literature because all refer to a niobium substituted Mg₄Ta₂O₉ compound. Mg₄Ta₂₋ₓNbₓO₉ is a blue emitting x-ray phosphor which has more efficient x-ray to visible light conversion than the host Mg₄Ta₂O₉ itself.

The magnesium tantalum oxides of the invention may be made by conventional ceramic powder processing. This involves the mixing of the proper molar proportions of magnesium oxide, tantalum oxide and optionally niobium oxide and rare earth oxides by grinding in a mortar to fine particle size and then firing to 1400°C, optionally with intermediate grinding and refiring. The materials also may be processed with a flux at lower firing temperatures. When the niobium containing magnesium tantalum oxides are formed, the niobium oxide powders are added prior to the grinding and firing. After firing, the particles are ground to a particle size suitable for forming the x-ray intensifying screens of the invention. The median particle size utilized is generally between .5 and 40 microns. A median particle size of between 1 and 20 microns is preferred for ease of screen formulation, as well as optimizing the screen properties, such as speed, sharpness and noise.

The intensifying screens containing the magnesium tantalum oxides of the invention are formed by conventional coating techniques where the powders are mixed with a solution of a resin binder material and coated by means such as blade coating onto a substrate. The magnesium tantalum oxide containing layer of the invention then may be overcoated with a protective layer. It is understood that both the protective layer, and the resin forming the matrix into which the phosphor particles are held are preferably formed of transparent resins that do not interfere with the passage of either x-rays or the emitted light from the phosphors.

While it is recognized that the phosphor layers need not contain a separate binder, in most applications the phosphor layers contain sufficient binder to give structural coherence to the phosphor layer. In general the binders useful in the practice of the invention are those conventionally employed in the art. Binders are generally chosen from a wide variety of known organic polymers which are transparent to X radiation and emitted light. Binders commonly employed in the art include sodium o-sulfobenzaldehyde acetal of poly(vinyl alcohol); chlorosulfonated poly(ethylene); a mixture of macromolecular bisphenol poly(carbonates) and copolymers comprising bisphenol carbonates and poly(alkylene oxides); aqueous ethanol soluble nylons; poly(alkyl acrylates and methacrylates) and copolymers of poly(alkyl acrylates and methacrylates with acrylic and methacrylic acid); poly(vinyl butyral); and poly(urethane) elastomers. These and other useful binders are disclosed in U.S. Patents 2,502,529; 2,887,379; 3,617,285; 3,300,310; 3,300,311; and 3,743,833; and in Research Disclosure, Vol. 154, February 1977, Item 15444, and Vol. 182, June 1979. Research Disclosure is published by Kenneth Mason Publications, Ltd., Emsworth, Hampshire PO10 7DD, England. Particularly preferred binders are poly(urethanes), such as Estane™, Permuthane™, and Cargill™

Any conventional ratio of phosphor to binder can be employed. Generally thinner phosphor layers and sharper images are realized when a high weight ratio of phosphor to binder is employed. Preferred phosphor to binder ratios are in the range of from 7:1 to 25:1 for screen constructions intended to withstand commercial screen exposure repetitions without loss of structural integrity. For limited or single exposure applications it is, of course, appreciated that any minimal amount of binder consistent with structural integrity is satisfactory.

In those instances in which it is desired to reduce the effective thickness of a phosphor layer below its actual thickness the phosphor layer is modified to impart a small, but significant degree of light absorption. If the binder is chosen to exhibit the desired degree of light absorption, then no other ingredient of the phosphor layer is required to perform the light attenuation function. For example, a slightly yellow polymer will absorb a significant fraction of phosphor emitted blue light. Ultraviolet absorption can be similarly achieved. It is specifically noted that the less structurally complex chromophores for ultraviolet absorption particularly lend themselves to incorporation in polymers.

In most instances a separate absorber is incorporated in the phosphor layer to reduce its effective thickness. The absorber can be a dye or pigment capable of absorbing light within the spectrum emitted by the phosphor. Yellow dye or pigment selectively absorbs blue light emissions and is particularly useful with a blue emitting phosphor. On the other hand, a green emitting phosphor is better used in combination with magenta dyes or pigments. Ultraviolet emitting phosphors can be used with known ultraviolet absorbers. Black dyes and pigments are, of course, generally useful with phosphors, because of their broad absorption spectra. Carbon black is a preferred light absorber for incorporation in the phosphor layers. Luckey and Cleare U.S. Patent 4,259,588, here incorporated by reference, teaches that increased sharpness (primarily attributable to reduced crossover, discussed below) can be achieved by incorporating a yellow dye in a terbium-activated gadolinium oxysulfide phosphor layer.

Apart from the phosphor layers and the assembly features described above, the screen can be of any conventional construction. The screen supports are most commonly film supports of high dimensional integrity, such as poly(ethylene terephthalate) film supports. For best image definition, when the front screen support and subbing and anticurl layers are transparent, the phosphor layer either contains an absorber or a black surface is positioned adjacent to the anticurl layer during exposure. For example, a black poly(vinyl chloride) or paper sheet can be positioned adjacent to the anticurl layer. Typically the adjacent interior surface of the cassette in which the assembly is mounted is a black polyurethane (or similar polymeric) foam layer, which can be relied upon for light absorption contributing to image sharpness. When the screen supports are not themselves black, best sharpness levels are realized when a black film or paper is interposed between the cassette and each screen of the image recording assembly. Independently of cassette construction the front screen support and/or its subbing and anticurl layers can be black or suitably colored to absorb emitted light, thereby minimizing light reflection and image sharpness degradation. The back screen support as well as its subbing and anticurl layers can be of the same form as described for the front screen. If desired to increase speed, both the front and back screen supports and/or their subbing and anticurl layers can be reflective of emitted light.

For example, a blue or white back screen support can be chosen to reflect light emitted by calcium tungstate or rare earth-activated yttrium tantalate or a green or white support can be chosen to reflect light emitted from a rare earth-activated lutetium or gadolinium oxysulfide phosphor. Titania is preferably coated on or incorporated in the front and back screen supports to maximize reflection of green light. Metal layers, such as aluminum, can be used to enhance reflection. Paper supports, though less common for intensifying screens than film supports, are known and can be used for specific applications. Dyes and pigments are commonly loaded into supports to enhance absorption or reflection of light. Air can be trapped in supports to reflect ultraviolet and visible light. Intensifying screen supports and the subbing layers used to improve coating adhesion can be chosen from among those employed for silver halide photographic and radiographic elements, as illustrated by Research Disclosure, Vol. 176, December 1978, Item 17643, Section XVII, and Research Disclosure, Vol. 184, August 1979, Item 18431, Section I, the disclosures of which are here incorporated by reference.

An overcoat, though not required, is commonly located over the phosphor layer for humidity and wear protection. The overcoat can be chosen using the criteria described above for the binder. The overcoat can be chosen from among the same polymers used to form either the screen binder or the support, with the requirements of toughness and scratch resistance usually favoring polymers conventionally employed for film supports. For example, cellulose acetate is a preferred overcoat used with the preferred poly(urethane) binders. Overcoat polymers are often used also to seal the edges of the phosphor layer.

While anticurl layers are not required for the screens, they are generally preferred for inclusion. The function of the anticurl layer is to balance the forces exerted by the layers coated on the opposite major surface of the screen support which, if left unchecked, cause the screen to assume a non-planar configuration, e.g., to curl or roll up on itself. Materials forming the anticurl layers can be chosen from among those identified above for use as binders and overcoats. Generally an anticurl layer is formed of the same polymer as the overcoat on the opposite side of the support. For example, cellulose acetate is preferred for both overcoat and anticurl layers.

To prevent blocking, particularly adhesion of the radiographic element and intensifying screen, the overcoats of the phosphor layers can include a matting agent, although matting agents are more commonly included in radiographic elements than in screens. Useful matting agents can be chosen from among those cited by Research Disclosure, Item 17643, cited above, Section XVI. A variety of other optional materials can be included in the surface coatings of the intensifying screens, such as materials to reduce static electrical charge accumulation, plasticizers, lubricants, and the like, but such materials are more commonly included in the radiographic elements which come into contact with the intensifying screens.

### Examples

The following examples are illustrative of the invention and not exhaustive of the possibilities of the invention. Parts and percentages are by weight unless otherwise indicated.

### Example 1 - Preparation of Mg₄Ta₂O₉

1.612g of MgO and 4.419g of Ta₂O₅ were ground in a mortar and pestle, then placed in an alumina crucible. The sample was heated 20 hours at 1400°C with one intermediate grinding after 10 hours. The final product was a white powder, and the major phase was identified as Mg₄Ta₂O₉ by x-ray powder diffraction. Visual examination of the sample during irradiation with 70Kvp tungsten x-rays proved that the sample was an x-ray excitable luminophore, the primary emission appearing blue to the eye.

### Examples 2-11 - Preparation of Mg₄Ta₂₋ₓNbₓO₉ x-ray phosphors

Table 1 lists the gram quantities of reactants which were mixed and heated in the same manner as presented in Example 1. The PMT response is the relative x-ray response of the samples where the National Bureau of Standards 1026 CaWO₄:Pb standard is defined as giving a PMT response equal to 100. The sample PMT measurements are reported as percentages of the NBS 1026 standard. The x-ray response measurements were taken using a tungsten target x-ray source in an XRD 6 generator. The x-ray tube was run at 70 kVp, 10mA, and the radiation from the tube was filtered through 0.5 mm Cu and 1 mm Al filters before reaching the sample. The luminescent response of the powders, packed in 2.54 cm diameter x 6 mm thick planchettes, was measured using an IP-28 photomultiplier tube at 500V bias. The voltage from the photomultiplier tube was measured with a Keithley high impedance electrometer, and is proportional to the total light output of the sample.

**Table 1**

| Example | MgO (g) | Ta₂O₅ (g) | Nb₂O₅ (g) | PMT |
|---|---|---|---|---|
| 2 | 1.6124 | 4.4167 | .0013 | 252 |
| 3 | 1.6124 | 4.4155 | .002 | 278 |
| 4 | 1.6124 | 4.396 | .0133 | 387 |
| 5 | 1.6124 | 4.3084 | .066 | 370 |
| 6 | 1.6124 | 4.1979 | .133 | 500 |
| 7 | 1.6124 | 4.0874 | .1993 | 500 |
| 8 | 1.6124 | 3.9770 | .266 | 404 |
| 9 | 1.6124 | 3.8665 | .332 | 434 |
| 10 | 1.6124 | 3.756 | .399 | 369 |
| 11 | 1.6124 | 4.4189 | 0.0 | 108 |
| Control | Sample | | Calcium Tungstate | 100 |

The niobium concentration range spanned in Table 1 is from 0 mole percent to 17 mole percent niobium substitution based on the total moles of pentavalent cation present in the host lattice, Mg₄Ta₂O₉. It is clear from Table 1 that niobium is an activator for Mg₄Ta₂O₉, and that the niobium substituted materials are superior x-ray phosphors. In addition, all of the tantalate luminophore powders give relative PMT values which are larger than the NBS 1026 calcium tungstate reference powder.

### Example 12 - Preparation of Mg₄Ta₂O₉ using a flux

1.612g of MgO and 4.419g of Ta₂O₅ were ground in a mortar and pestle along with 1.5g of K₂SO₄ as a flux. The sample was placed in an alumina crucible and heated for 8 hours at 1300°C. The sample was then crushed and the majority of the flux removed by washing with 500 mls of hot distilled water. The sample was then collected by suction filtration and allowed to dry. Photomicrographs and x-ray powder diffraction showed that the K₂SO₄ flux aids the crystallization of the Mg₄Ta₂O₉ phase. The product is a free-flowing white powder. Measurement of the luminescence of the powder sample under x-ray radiation as described in Example 2 gave a PMT reading which was approximately twice that of the NBS 1026 calcium tungstate standard powder. The x-ray excited prompt emission spectrum of this powder was taken using the filtered x-ray source described in Example 2. The tube was operated at 70kVp and 30mA. The spectrum was acquired with an Instruments S.A. Model HR 320 grating spectrograph equipped with a Princeton Applied Research Model 1422/01 intensified linear diode array detector. The data acquisition and processing was controlled by a Princeton Applied Research Model 1460 OMA III optical multi-channel analyzer. The spectrum has been corrected for the spectral response of the detector-monochromator combination. The x-ray excited emission spectrum of this sample is shown in Fig. 2. Fig. 2 shows that Mg₄Ta₂O₉ is a blue emitting prompt emission x-ray phosphor.

### Examples 13-22 - Preparation of Mg₄Ta₂₋ₓNbₓO₉ using a flux

Table 2 lists the gram amounts of starting materials which were used to prepare Mg₄Ta₂₋ₓNbₓO₉ phosphors using a K₂SO₄ flux. The amount of flux used, which is nominally 25 percent by weight of starting materials, is also given.

**Table 2**

| Example | MgO (g) | Ta₂O₅ (g) | Nb₂O₅ (g) | Flux |
|---|---|---|---|---|
| 13 | 1.612 | 4.418 | -0- | 1.51g |
| 14 | 1.612 | 4.417 | .001 | 1.51g |
| 15 | 1.612 | 4.414 | .002 | 1.51g |
| 16 | 1.612 | 4.397 | .013 | 1.50g |
| 17 | 1.612 | 4.375 | .0265 | 1.50g |
| 18 | 1.612 | 4.308 | .066 | 1.50g |
| 19 | 1.612 | 4.198 | .133 | 1.48g |
| 20 | 1.612 | 3.977 | .266 | 1.46g |
| 21 | 1.612 | 3.756 | .399 | 1.43g |
| 22 | 1.612 | 3.535 | .531 | 1.42g |

Each sample was ground in a mortar and pestle, then placed in an alumina crucible and heated for 10 hours at 1300°C. The samples were then crushed and the majority of the flux leached from the phosphor with hot distilled water. The phosphor powders were then collected by suction filtration. The product in each case was a free-flowing white powder. X-ray powder diffraction indicated that the Mg₄Ta₂O₉ structure type was maintained in these phosphors. X-ray luminescence measurements were taken using the method described in Examples 2-11. The results are listed below in Table 3, along with the nominal niobium activator concentration expressed as mole percent of total pentavalent cation present.

**Table 3**

| Example | % Nb | PMT |
|---|---|---|
| 13 | -0- | 181 |
| 14 | 0.05 | 267 |
| 15 | 0.1 | 358 |
| 16 | 0.5 | 392 |
| 17 | 1.0 | 435 |
| 18 | 2.5 | 391 |
| 19 | 5.0 | 373 |
| 20 | 10.0 | 269 |
| 21 | 15.0 | 186 |
| 22 | 20.0 | 136 |
| Control | Calcium Tungstate | 100 |

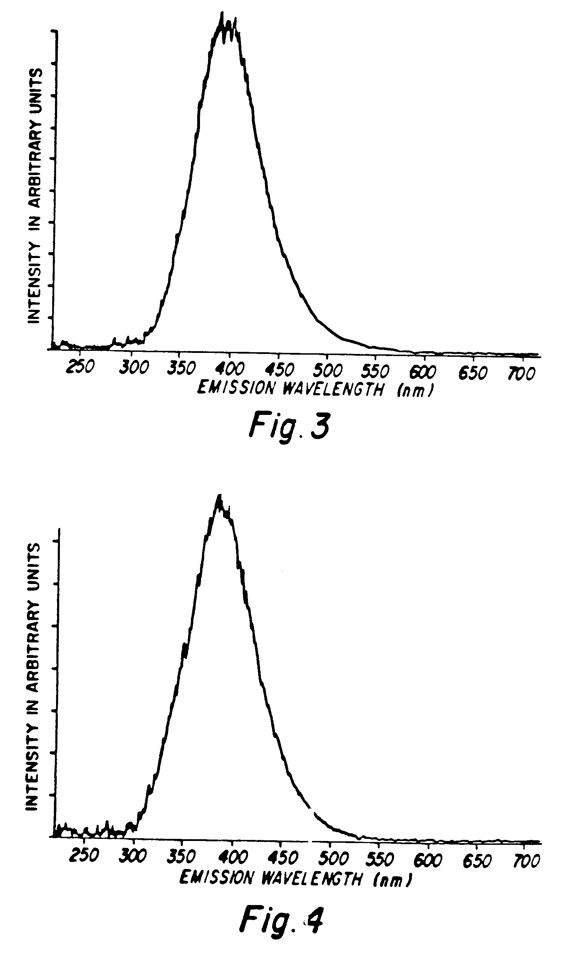

Table 3 shows that the Mg₄Ta₂₋ₓNbₓO₉ phosphors prepared by a flux method give larger relative PMT values than the NBS standard 1026 CaWO₄:Pb powder. The table also indicates that a useful range of activator concentration for niobium is between 0 and 20 mole percent substitution, based on total moles of pentavalent cation present. The results suggest that niobium concentrations of between 0.1 and 10 mole percent give excellent phosphors, with a composition of one mole percent substitution having a relative PMT response greater than four times that of the NBS 1026 standard CaWO₄ phosphor under identical test conditions. The x-ray excited prompt emission spectrum of a Mg₄Ta₂₋ₓNbₓO₉ phosphor of nominal composition 2.5 mole percent niobium prepared using 40 weight percent K₂SO₄ as a flux is shown in Fig. 3. The spectrum was acquired as described in Example 12.

### Example 23 - Preparation of an Mg₄Ta₂₋ₓNbₓO₉ Radiographic Intensifying Screen

16.12 g MgO, 43.75 g Ta₂O₅, 0.265 g Nb₂O₅, and 15.0 g K₂SO₄ were separately ground in a mortar and pestle then added together and ball milled for one hour. The sample was then placed in an alumina boat and heated for 10 hours at 1300°C in air. The sample was removed, crushed with a mortar and pestle, then washed with 3 one-liter portions of hot water to remove the flux. The sample was collected by suction filtration. The product was a free-flowing white powder consisting of regularly shaped polyhedral particles between 2 and 20 microns in size. The sample was then passed through a 400 mesh sieve, and the product was collected.

The sieved phosphor was then dispersed in a 15% solution of Permuthane U-6366® polyurethane using a methylene chloride/methanol solvent at a pigment to binder ratio of 8.5:1. The dispersion was then hand-coated onto a blue dyed polyethylene terephthalate support and overcoated with cellulose acetate. The measured phosphor coverage for the coating was approximately 646 g/m².

The emission spectrum of a 25.8 cm² piece of the coating is shown in Fig. 4. The spectrum was obtained using the methods described in Example 12, with the exception that a 25.8 cm² piece of screen was used in place of a planchette filled with sample. The relative integrated emissive power from the screen under these experimental conditions was 292 (arbitrary units). For comparison, a 25.8 cm² piece of a standard 100 speed CaWO₄ screen has a relative integrated emissive power of 100 (arbitrary units) under identical conditions. This example demonstrates that radiographic intensifying screens made from Mg₄Ta₂₋ₓNbₓO₉ phosphors have a larger emissive power than a CaWO₄ screen.

### Example 24 - Preparation and Use of an Mg₄Ta₂₋ₓNbₓO₉ Radiographic Intensifying Screen

A mixture of 3.225 g MgO, 8.749 g Ta₂O₅, 0.053 g Nb₂O₅, and 4.811 g K₂SO₄ was thoroughly ground in an agate mortar and pestle, then placed in a 20 ml alumina crucible and heated for 3 hours at 1250°C in air. After cooling the sample was crushed, washed with hot water to remove the flux, then collected by suction filtration. The product was a free-flowing white powder consisting of regularly shaped polyhedral particles of between 2 and 10µm (microns) in size. The sample was then passed through a 400 mesh sieve and the product collected. This preparation was repeated 12 times.

The sieved phosphor was dispersed in a 13% solution of Permuthane U-6366 polyurethane using a methylene chloride/methanol solvent at a pigment to binder ratio of 10:1, hand coated onto a blue dyed polyethylene terephthalate support, and overcoated with cellulose acetate. The measured phosphor coverage for the screen was approximately 377 g/m².

A pair of Mg₄Ta₂₋ₓNbₓO₉ screens from the coating described above were used with Kodak X-Omat K* film to take radiographs of a radiographic phantom. Kodak X-Omat K film is a commonly used double-sided blue sensitive medical x-ray film. The radiographs were made using 70 kVp x-rays from a single phase medical x-ray generator. The exposed film was then processed using a KodakT RP X-OmatT processor model M6AW using Kodak RP X-Omat developer and fixer solutions. For a control, radiographs using a pair of commercially available Kodak X-OmaticT regular screens with Kodak X-Omat K film were taken under identical conditions using the same radiographic phantom.

The Mg₄Ta₂₋ₓNbₓO₉ screens were approximately 10% slower than the control Kodak X-Omatic regular screens. The radiograph of the radiographic phantom made with the Mg₄Ta₂₋ₓNbₓO₉ screens was sharper than the control, and the visibility of low contrast detail in the radiographic phantom was equivalent to the control.

These results demonstrate that radiographic intensifying screens prepared from magnesium tantalate phosphors can be used to image objects with ionizing radiation and are suitable for use with existing films.

It is possible to use other activators in the Mg₄Ta₂O₉ host lattice. Some illustrative examples are presented below:

### Examples 25 and 26 - Preparation of Rare Earth Activated Mg₄Ta₂O₉ Phosphors

### 25. Mg₄Ta₂O₉: 1 mole %Eu (based on total moles of Ta)

A mixture of 1.612 g MgO, 4.419 g Ta₂O₅, 0.0352 g Eu₂O₃, and 1.5 g K₂SO₄ were ground together in an agate mortar and pestle, then placed in an alumina crucible and heated for 10 hours at 1300°C in air. After cooling to room temperature the sample was crushed, the K₂SO₄ removed by washing with hot distilled water, and the material collected by suction filtration. The product was a white free-flowing powder.

### 26. Mg₄Ta₂O₉: 1 mole % Tb (based on total moles of Ta)

A mixture of 1.612 g MgO, 4.419 g Ta₂O₅ g Tb₄O₇, and 1.5 g K₂SO₄ were ground together in an agate mortar and pestle then placed in an alumina crucible and heated for 10 hours at 1300°C in air. After cooling to room temperature the sample was crushed, the K₂SO₄ removed by washing with hot distilled water, and the material collected by suction filtration. The product was a white free-flowing powder.

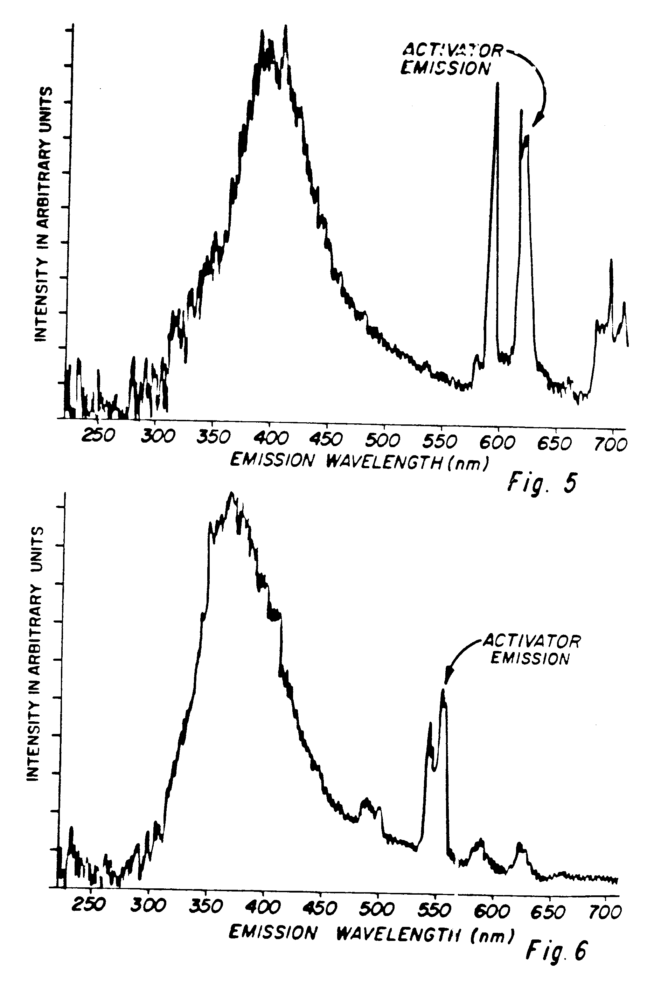

The x-ray excited prompt emission spectra of europium activated (Example 25) and terbium activated (Example 26) magnesium tantalate phosphors are shown in the accompanying Figs. 5 and 6. The spectra were obtained as described in Example 12. The red emission around 600 nm in the europium activated samples is typical of the emission of trivalent europium. The emission at around 550 nm in the terbium activated sample is typical of the emission of trivalent terbium. The results demonstrate that rare earth activated Mg₄Ta₂O₉ phosphors can be prepared.

As illustrated by the above examples, the magnesium tantalate phosphors of the invention provide phosphors for use in x-ray intensifying screens. However, although as illustrated with niobium, europium, and terbium as an activator for the magnesium tantalate, it is also possible that other activators could be utilized. Typical of such materials are manganese or rare earth cations. The rare earth activators will be defined as activators selected from the group of elements having atomic numbers greater than or equal to 57 or less than or equal to 71. The preferred activator is niobium as the shift is in the correct spectral direction to increase blue light emission to improve performance with present x-ray film. However, in instances where it would be desirable to increase emissions in other wavelength regions, the substitution of the above-listed suitable activators would be carried out.

While the examples illustrated the use of a flux of potassium sulfate, it is known in the phosphor forming art that other fluxes have been used in phosphor formation. Typical of such other flux materials are metal carbonate fluxes, borate fluxes, tungstate fluxes, and halide fluxes.

While illustrated with the formation of specific magnesium tantalates and with particular x-ray intensifying screen formations, other variations are within the scope of the invention. For instance, it would be within the scope of the invention to form several layers of the magnesium tantalate in an intensifying screen. Further, it would be possible to utilize layered combinations of magnesium tantalate and the magnesium tantalate substituted with niobium. The invention is only intended to be limited by the scope of the claims attached hereto.

## Claims

1. An x-ray intensifying screen comprising a phosphor characterized by Mg₄Ta₂₋ₓNbₓO₉ wherein x = 0 to 0.4.

2. The screen of claim 1 wherein said screen further comprises a support layer for said phosphor layer.

3. The screen of claim 1 wherein said magnesium tantalum oxide comprises Mg₄Ta₂O₉.

4. The screen of claim 3 wherein phosphor comprises an activator which consists of at least one material selected from the group manganese and rare earth elements.

5. The screen of any one of claims 1 to 4 inclusive further characterized in that the phosphor is prepared in the prescence of a K₂SO₄ flux.

6. A method of converting an x-ray energy field into radiation principally in the blue region of the visual spectrum comprising positioning in the x-ray field a phosphor screen characterized by a phosphor that consists of Mg₄Ta₂₋ₓNbₓO₉ wherein x = 0 to 0.4.

7. The method of claim 6 wherein a support layer for said phosphor layer is provided.

8. The method of claim 6 wherein said phosphor comprises Mg₄Ta₂O₉.

9. The method of claim 6 wherein said phosphor further comprises an activator.

10. The method of claim 6 wherein said phosphor is dispersed in a polymeric binder.

## Patentansprüche

1. Röntgenstrahl-Verstärkerschirm mit einem Phosphor, gekennzeichnet durch die Formel Mg₄Ta₂₋ₓNbₓO₉, worin x = 0 bis 0,4 ist.

2. Schirm nach Anspruch 1, der weiterhin einen Schichtträger für die Phosphorschicht aufweist.

3. Schirm nach Anspruch 1, worin das Magnesiumtantaloxid Mg₄Ta₂O₉ aufweist.

4. Schirm nach Anspruch 3, in dem der Phosphor einen Aktivator aufweist, der aus mindestens einem Material, ausgewählt aus der Gruppe Mangan und Seltenen Erdelementen, besteht.

5. Schirm nach einem der Ansprüche 1 bis 4 einschließlich, weiterhin dadurch gekennzeichnet, daß der Phosphor in Gegenwart eines K₂SO₄-Fließmittels hergestellt worden ist.

6. Verfahren zur Umwandlung eines Röntgenstrahl-Energiefeldes in Strahlung, hauptsächlich des blauen Bereiches des sichtbaren Spektrums, bei dem man in das Röntenstrahl-Feld einen Phosphorschirm bringt, der gekennzeichnet ist durch einen Phosphor, der besteht aus Mg₄Ta₂₋ₓNbₓO₉ , worin x = 0 bis 0,4 ist.

7. Verfahren nach Anspruch 6, bei dem ein Schichtträger für die Phosphorschicht vorgesehen ist.

8. Verfahren nach Anspruch 6, bei dem der Phosphor Mg₄Ta₂0₉ umfaßt.

9. Verfahren nach Anspruch 6, bei dem der Phosphor weiterhin einen Aktivator aufweist.

10. Verfahren nach Anspruch 6, bei dem der Phosphor in einem polymeren Bindemittel dispergiert ist.

## Revendications

1. Ecran renforçateur de rayons X comprenant une substance luminophore de formule Mg₄Ta₂₋ₓNbₓO₉ où x est compris entre 0 et 0,4.

2. Ecran selon la revendication 1, comprenant de plus un support pour la couche comprenant la substance luminophore.

3. Ecran selon la revendication 1, dans lequel l'oxyde de tantale et de magnésium est Mg₄Ta₂O₉.

4. Ecran selon la revendication 3, dans lequel la substance luminophore comprend un activateur qui est choisi dans le groupe du manganèse et des terres rares.

5. Ecran selon la revendication 1 à 4, dans lequel on prépare la substance luminophore en présence d'un flux de K₂SO₄.

6. Procédé pour convertir le champ d'énergie des rayons X en un rayonnement situé principalement dans la région bleue du spectre visible, dans lequel on place dans le champs des rayons X un écran comprenant un luminophore qui est Mg₄Ta₂₋ₓNbₓO₉ où x est compris entre 0 et 0,4.

7. Procédé selon la revendication 6, où un support est prévu pour la couche comprenant la substance luminophore.

8. Procédé selon la revendication 6, dans lequel la substance luminophore est Mg₄Ta₂O₉.

9. Procédé selon la revendication 6, dans lequel la substance luminophore comprend un activateur

10. Procédé selon la revendication 6, dans lequel le phosphore est dispersé dans un liant polymère.
